# EUROPEAN PATENT APPLICATION

(11) **EP 2 605 370 A1**
(43) Date of publication of application: **19.06.2013**
(21) Application number: 11193241.4
(22) Date of filing: 13.12.2011
(51) Int. Cl.: H02K 1/16, H02K 15/02

(54) **Methods and arrangement for determining a circumferential order of stator segments**

(71) Applicant: Siemens Aktiengesellschaft, 80333 München (DE)
(72) Inventor: Le Besnerais, Jean, 59370 Mons en Baroeul (FR)

(57) **Abstract**

It is described a method for determining a circumferential order of segments for forming a portion (500) of an electromagnetic machine, in particular an electrical generator, the method comprising: obtaining measuring data (101, 301) indicative of a respective radial extent (r) of each of at least three segments (511-516), wherein the at least three segments, when successively arranged in a circumferential direction (302, 502), form a ring; obtaining information indicative of a desired spatial frequency characteristic of the radial extent in the ring; selecting, based on the measuring data and the information, a circumferential ordering (112, 111, 113, 114, 116, 115) of the segments (511-516) from possible orderings of the segments in the circumferential direction such that the desired spatial frequency characteristic is achieved.

## Description

### Field of invention

The present invention relates to a method and to an arrangement for determining a circumferential order of segments for forming a portion of an electromagnetic machine and to a method for manufacturing the portion of the electromagnetic machine, in particular an electrical generator.

### Art Background

A stator and/or a rotor of an electrical machine, such as an electrical generator, may be build in different segments or using a number of circumferential segments instead of a ringshaped single component to ease transportation which may be difficult due to a tunnel size limitation or a weight limitation.

In the electrical machine a stator may be considered as a fixed portion of the electrical machine and the rotor may be considered as a rotatable portion of the electrical machine rotating during operation of the electrical machine relative to the stator, wherein a rotation axis may define an axial direction of the stator and/or of the rotor.

Between the stator and the rotor an air gap is formed which should be as uniform as possible to ensure smooth and safe operation of the electrical machine.

However, it has been observed that an electrical machine assembled from a number of circumferential segments (in particular stator segments and/or rotor segments) exhibits a non-uniform air gap between the stator and the rotor at different circumferential positions. Thereby, a spatial harmonic content of air gap Maxwell-forces may be increased and the asymmetries may create vibration harmonics that may excite the components of the electrical machine and may thus radiate significant noise.

There may be a need for a method and an arrangement for designing and manufacturing a portion of an electromagnetic machine which is to be assembled from plural circumferential segments.

This need is met by the subject-matter of the independent claims. The dependent claims specify exemplary embodiments.

### Summary of the Invention

According to an embodiment of the present invention it is provided a method for determining a circumferential order of segments for forming a portion of an electromagnetic machine, in particular an electrical generator, the method comprising: obtaining measuring data indicative of a respective radial extent (or dimension) of each of at least three segments, wherein the at least three segments, when successively arranged in a circumferential direction, form a ring (or an annular structure); obtaining information (or data) indicative of a desired spatial frequency characteristic of the radial extent in the ring; selecting, based on the measuring data and the information, a circumferential ordering of the segments from possible orderings of the segments in the circumferential direction such that the desired spatial frequency characteristic is achieved.

The segments may in particular have a shape corresponding at least approximately to a section of a circular ring. The segments may for example comprise iron to provide a predetermined magnetic permeability such that magnetic field lines are concentrated within the segments when a magnetic field is applied in particular by using a wound wire wound around plural teeth protruding from each (stator) segment.

The segments may have been manufactured to have a particular desired radially outer or radially inner extend but due to inaccuracies of the manufacturing process the segment may have an actual radially outer or radially inner extend that deviates from the desired radially outer or radially inner extend. Thereby, the deviation may vary for the different segments such that a first segment may exhibit a first deviation (along a circumferential extend of the segment) and a second segment may exhibit a second deviation (along the circumferential extend of the second segment), wherein the first deviation differs from the second deviation. Thereby, depending on the circumferential order in which the segments are assembled to form the portion of the electromagnetic machine different problems may arise.

In particular, for an outer rotor electrical machine (in which the rotor is arranged radially outwards of the stator), the stator roundness (or deviation from the circular shape) may directly give the harmonic content of the exciting forces. E.g., a purely circular stator may give a zero spatial order force wave at a 6f frequency, an oval stator may give a second order force wave at 6f, an eccentric stator may give a first order force wave at 6f, etc. These forces may excite the rotor modal shape of a particular spatial order, thereby creating high tonalities in the noise spectrum what is undesired.

The radial extent may relate to a radially outer extent (or dimension) or/and to a radially inner extent (or dimension). For a stator segment the radial extent may for example relate to a radially outer extent of one or more teeth of the stator segment.

In particular, the measuring data may indicate a deviation of the radial extent of the segment from a predetermined radial extent. The at least three segments, in particular six segments, form after assembly an annular structure, such as an annular stator or an annular rotor.

The information may be input by a user or may be derived from other constructional details of the electromagnetic machine or/and from electrical and/or mechanical and/or geometrical properties of the electromagnetic machine. In particular, the information may be derived based on a geometry of the electromagnetic machine and/or based on electrical properties of the electromagnetic machine and may further include information regarding the material used to manufacture the electromagnetic machine, such as information regarding magnetic permeability.

Depending on the construction and/or the application or operation mode of the electromagnetic machine the desired spatial frequency characteristic may change. The desired spatial frequency characteristic may comprise information regarding a intended or desired variation in the radial extent in dependence of a circumferential position which may also represented by an angle ϕ in a conventional cylinder coordinate system, when the axial direction is aligned with the z-axis of the cylinder coordinate system.

Depending on the number of segments which are required to form the ring a number of possible orderings may change. In particular, the more segments are required to from the ring the more possible orderings occur. In particular, each permutation of the sequence of the segments may be considered. When selecting the circumferential ordering the measuring data and the information are considered. In particular, thereby measuring data regarding everyone of the segments are considered. Each one of the possible orderings may result in a possible spatial frequency characteristic and that one of the possible orderings may be selected which is associated with that spatial frequency characteristic of the possible spatial frequency characteristics which most closely resembles (or deviates the less from) the desired spatial frequency characteristic.

Thereby, the method does not need to comprise any steps of modifying the pre-manufactured segment, but the segments are only ordered in a circumferential direction such that the desired spatial frequency characteristic is achieved. Thereby, an efficient and cost-effective method for determining a circumferential order of segments is provided which may advantageously be used for manufacturing of an electromagnetic machine by assembling the segments in the thus determined circumferential order.

According to an embodiment of the present invention the selecting comprises computing a spatial frequency characteristic for every ordering of the possible orderings and comparing the computed spatial frequency characteristic with the desired spatial frequency characteristic.

The spatial frequency characteristic for a given ordering may comprise information regarding the frequency of the variation of the radial extent, when the variation is considered along the circumferential direction. Thereby, the spatial frequency characteristic may for example be represented as a spectrum of amplitudes, wherein each amplitude indicates a magnitude or strength of a particular frequency component (spatial frequency component). The spatial frequency characteristics may for example be computed by applying a discrete or a continuous Fourier transformation.

In particular, the comparing the computed spatial frequency characteristic with the desired spatial frequency characteristic may comprise determining a deviation between the computed spatial frequency characteristic and the desired spatial frequency characteristic. In particular, the deviation may be computed by obtaining differences between amplitudes of frequency components of the considered ordering and amplitudes associated with the desired spatial frequency characteristic.

In particular, the computed spatial frequency characteristic may be represented by computed amplitudes for a number of frequency components and the desired spatial frequency characteristic may be represented by desired amplitudes or frequency components. The comparing may in particular comprise deriving differences between the computed amplitudes and the desired amplitudes. Further, the differences may be summed in order to quantify a similarity between the computed spatial frequency characteristics and the desired spatial frequency characteristics. That one of the possible orderings of the segments may be selected with which those computed amplitudes are associated which deviate the less from the desired amplitudes. In other embodiments, other criteria may be utilized to quantify a distance between or a similarity between the computed spatial frequency characteristic and the desired spatial frequency characteristic.

Thereby, a computationally feasible calculation may be enabled.

According to an embodiment of the present invention the computing the spatial frequency characteristic comprises calculating a Fourier Transform of the radial extent of the segments ordered in every one of the possible orderings.

Thereby, conventional methods for calculating the Fourier transform may be utilized, in particular employing a fast Fourier transformation (FFT). Thereby, the method may be accelerated and costs may be reduced.

When considering every one of the possible orderings it may be ensured that the actual optimal ordering may not be missed. Thereby, it may be ensured that the optimal ordering of the segments may be determined. Thereby, an electromagnetic machine assembled from the segments ordered in the circumferential direction according to the determined ordering may be operated in a safe and reliable manner, in particular meeting noise emission requirements for reducing noise emission.

According to an embodiment of the present invention the method is performed, wherein the obtaining the information comprises detecting a resonance of the electromagnetic machine.

At the resonance of the electromagnetic machine the amplitude of an oscillation of the electromagnetic machine may become especially high, wherein the resonance may be characterized by a particular oscillation frequency. The resonance of the electromagnetic machine may for example depend (in particular the resonance frequency may depend) on a number of teeth in the stator and/or a number of magnets in the rotor and/or a frequency of rotation during operation. Detecting the resonance of the electromagnetic machine may be helpful in determining the desired spatial frequency characteristic or at least for determining particular frequency components which should be reduced.

According to an embodiment of the present invention the method is performed, wherein the desired spatial frequency characteristic is characterized by minimization of a total harmonic distortion.

The total harmonic distortion (THD) may be indicative of the harmonic distortion of the radial extent of each of the segments, wherein the total harmonic distortion may be defined as the ratio of the sum of the powers of all harmonic components divided by the power of the fundamental frequency, i.e. the basic frequency being related to the inverse of the circumferential length of the ring assembled from the segments. In particular, the fundamental frequency may be defined as 2n/L, if L is the circumferential length of the ring assembled from the plural segments. The fundamental frequency may also be referred to as the first harmonic. By the minimization of the total harmonic distortion all harmonics higher than the first harmonics will be reduced. Thereby, the portion of the electromagnetic machine assembled from the thus ordered segments may exhibit a reliable operation in particular reducing noise emissions.

According to an embodiment of the present invention the method is performed, wherein the desired spatial frequency characteristic is characterized by minimization of an amplitude of at least one predetermined spatial frequency component of the extent and/or minimization of ovalization of the ring and/or minimization of a breathing mode (in particular related to a particular periodic movement of segments belonging to the stator or rotor).

It may be desirable to minimize only the amplitude of a particular predetermined spatial frequency component or may be desired to minimize amplitudes of a particular set of predetermined spatial frequency components, in order to safely operate the electromagnetic machine assembled from the thus ordered segments. Thereby, decreasing a degree of ovalization of the ring, in order to achieve a circular shape, may also be advantageous.

According to an embodiment of the present invention the method is performed wherein the measuring comprises optically measuring the extent, in particular using a laser. Thereby, a reliable measurement may be performed for accurately measuring the radial extent of the segments. Thereby, the method may be improved.

According to an embodiment of the present invention four to fifteen segments, in particular six segments, are assembled to form the ring. Thus, each segment may for example span an angular range between 10° and 90°, in particular between 30° and 80°, in particular 60°.

Thereby, the number of possible orderings may be restricted such that the method may be performed in a fast manner.

According to an embodiment of the present invention the method is performed, wherein the segments comprise stator segments each having at least one protruding tooth, wherein the measuring data indicative of a radial extent of at least one (in particular all) of the at least one tooth of each of the stator segments.

The stator segment may comprise one, two, three, four, or five to fifty teeth. When assembling the electromagnetic machine the teeth may receive coils, wherein each tooth may receive one or more coils formed by a wound wire. Between the teeth slots may be formed such that tooth and slots alternate in the circumferential direction. In particular, the teeth may be spaced apart in the circumferential direction and the slots may be spaced apart in the circumferential direction. The slots may be filled with the wire or the wire forming the coils received from the teeth.

The radial extent of each tooth may relate to an radially outer or radially inner portion (or end) of the tooth. Thus, the radial extent may correspond to an end of the tooth in the radial direction. Thereby, the method may be utilized for designing assembly of a stator.

According to an embodiment of the present invention the at least one tooth protrudes radially outwards. Thereby, an outer rotor electromagnetic machine may be scheduled or designed for assembly. Further, the electromagnetic machine may be designed for assembly.

According to an embodiment of the present invention the segments comprise rotor segments, in particular protruding radially inwards. Thereby, a rotor of an electromagnetic machine may be designed for assembly.

In particular, the method may be applied to stator segments in order to design a stator for assembly and may further be applied to or employed for rotor segments for designing a rotor for assembly. Thereby, the method may rely on or start from previously manufactured stator segments and/or rotor segments which may have or comprise deviations from a desired shape.

According to an embodiment of the present invention the method further comprises measuring the radial extent, in particular of each of the teeth of each of the stator segments and/or of each of the rotor segments. The measuring may for example comprise optically measuring the radial extent.

According to an embodiment of the present invention it is provided a method for manufacturing a portion (in particular a stator and/or a rotor) of an electromagnetic machine, in particular an electrical generator, the method comprising: Determining an order of segments for forming a portion of the electromagnetic machine according to an embodiment as described above and assembling the segments in the determined order. The portion of the electromagnetic machine assembled from the segments in the determined order may have reduce noise emissions and/or oscillations at particular frequencies compared to a conventional electromagnetic machine assembled from a number of segments.

It should be understood that features individually or in any combination disclosed, described, explained or applied to a method for determining a circumferential order of segments performing a portion of an electromagnetic machine may also be applied (individually or in any combination) to an arrangement for determining a circumferential order of segments for forming a portion of an electromagnetic machine according to an embodiment of the present invention and vice versa. According to an embodiment of the present invention it is provided an arrangement for determining a circumferential order of segments for forming a portion of an electromagnetic machine, in particular an electrical generator, the arrangement comprising: an input terminal adapted to obtain measuring data indicative of a respective radial extent of each of at least three segments, wherein the at least three segments, when successively arranged in a circumferential direction, form a ring; and to obtain information indicative of a desired spatial frequency characteristic of the radial extent in the ring; and a processor adapted to select a circumferential ordering of the segments from possible orderings of the segments in the circumferential direction such that the desired spatial frequency characteristic is achieved.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

Embodiments of the present invention are now described with reference to the accompanying drawings. The invention is not restricted to the illustrated or described embodiments.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 illustrates a graph considered in a method for determining a circumferential order of six segments according to an embodiment of the present invention;
Fig. 2 illustrates a spectrum of amplitudes of spatial frequency components of the measurement signal of the radial extent illustrated in Fig. 1;
Fig. 3 illustrates a radial extent of teeth of a stator segment in dependence of the circumferential direction after having ordered the six segments;
Fig. 4 illustrates a spectrum of amplitudes of spatial frequency components of the measured radial extent illustrated in Fig. 3; and
Fig. 5 schematically illustrates a stator of a generator, wherein the stator is assembled from six stator segments which are ordered according to a method of the present invention.

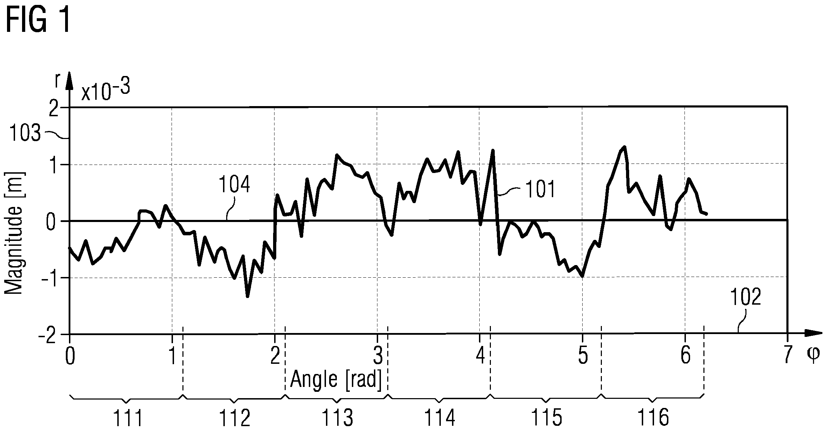

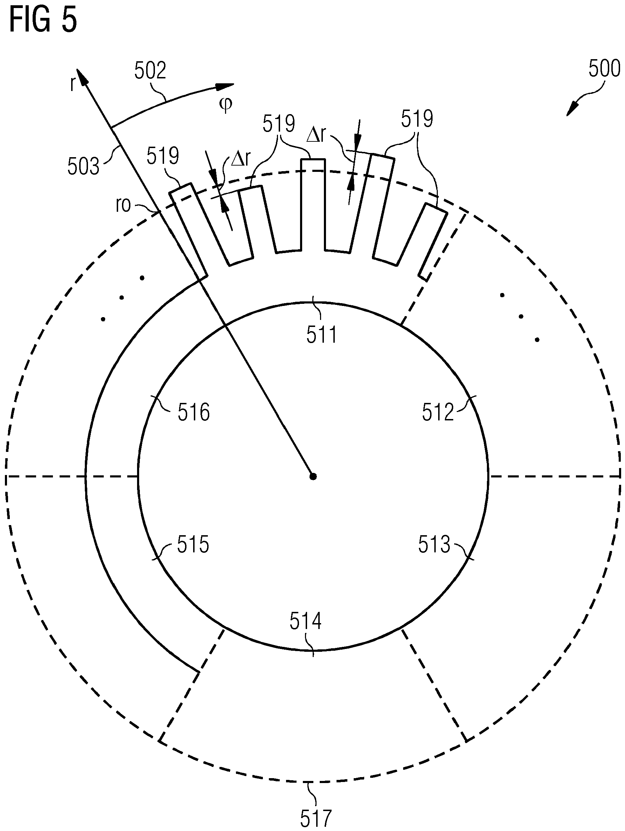

Fig. 1 illustrate a curve 101 representing a radial extent r of teeth of a stator as is illustrated in Fig. 5 and labelled with the reference sign 500, wherein the stator 500 is assembled from six stator segments 511, 512, 513, 514, 515, 516.

An abscissa 102 in Fig. 1 denotes the circumferential position ϕ in radian. The circumferential direction along which the circumferential position ϕ is determined is also labelled with reference sign 502 in Figure 5. The ordinate 103 in Fig. 1 denotes the radial extent r, wherein a radial direction is indicated in Fig. 5 with reference sign 503.

The radial extent r of the teeth of the stator segment 511 are illustrated by the curve 101 in the angle interval 111. Further, the radial extent of the teeth of the stator segments 512, 513, 514, 515 and 516 are indicated by the curve 101 in Fig. 1 in the angle interval 112, 113, 114, 115 and 116, respectively. As can be seen from Fig. 1, the radial extent r varies along the circumferential direction 102 (or 502 in Fig. 5) around a mean value r0 or around 0 meter. The average or mean value r0 is also the intended value of the radial extent and is labelled with reference sign 104 in Fig. 1. As is evident from Fig. 1, portions of some of the segments 511, 512, 513, 514, 515, 516 have a radial extent greater than the intended radial extent r0 and other portions of the stator sectors have a radial extent lower than the intended radial extent r0.

The particular distribution of the deviation of the actual radial extent from the intended radial extent r0 (line 104 in Fig. 1) leads to problems during the operation of an electromagnetic machine comprising the stator as illustrated in Fig. 5.

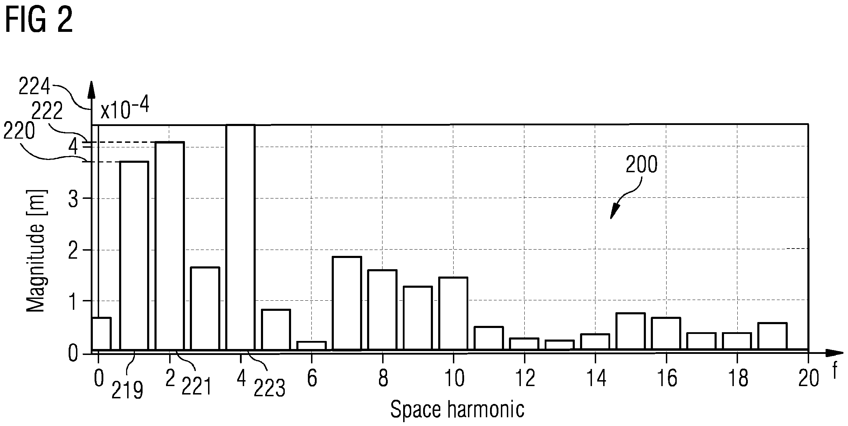

Fig. 2 illustrates a spectrum 200 of amplitudes of frequency components of the radial extent r indicated by the curve 101 in Fig. 1. On the abscissa 202 the spatial frequency f is indicated in multiples of the basic frequency f0 which is given by the quantity 2n/L, wherein L is the circumferential length of the circle 517 of the circumference of the stator 500 measured at the intended radius r0 of the teeth 519 (see Fig. 5).

As can be seen from Fig. 2 the amplitude 220 of the first order harmonic 219, the amplitude 222 of the second order harmonic 221 and the amplitude 224 of the fourth order harmonic 223 are especially high, whereas the other amplitudes corresponding to other frequency components are relatively low. However, the second order harmonic 221 and the fourth order harmonic 223 cause problems when using the stator 500 in an electromagnetic machine, such as a generator. Therefore, embodiments of the present invention provide a method and an arrangement for decreasing the undesired frequency components or decreasing amplitudes of components having undesired frequencies.

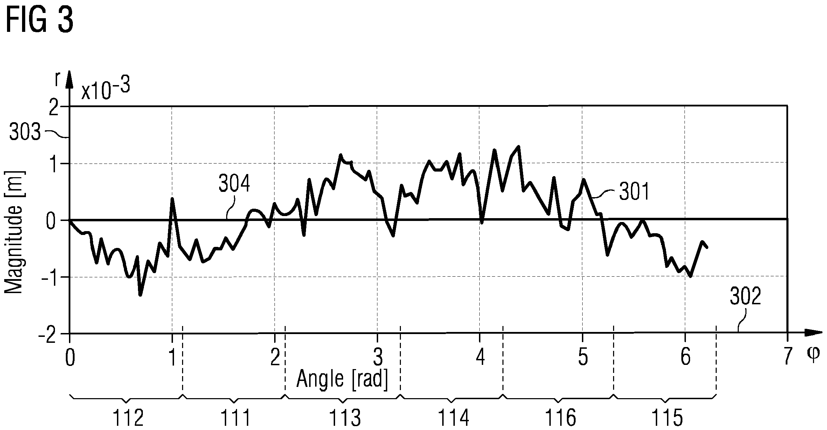

For decreasing the amplitudes of undesired frequencies the method considers all possible circumferential ordering of the stator segments 511, 512, 513, 514, 515 and 516 and calculates for each ordering the spectrum of the amplitudes of the spatial frequency components, such as spectrum 200 illustrated in Fig. 2. After having considered all possible orderings of the stator segments 511-516 the method selects a particular ordering of the segments in the order 512, 511, 513, 514, 516, 515 which shows a distribution of the radial extent r as illustrated in curve 301 of Fig. 3, wherein again on an abscissa 302 the circumferential position ϕ is indicated, while on the ordinate 303 the radial extent r is indicated, while the intended radial extent 304 amounts to the value r0 as indicated by the horizontal line 304.

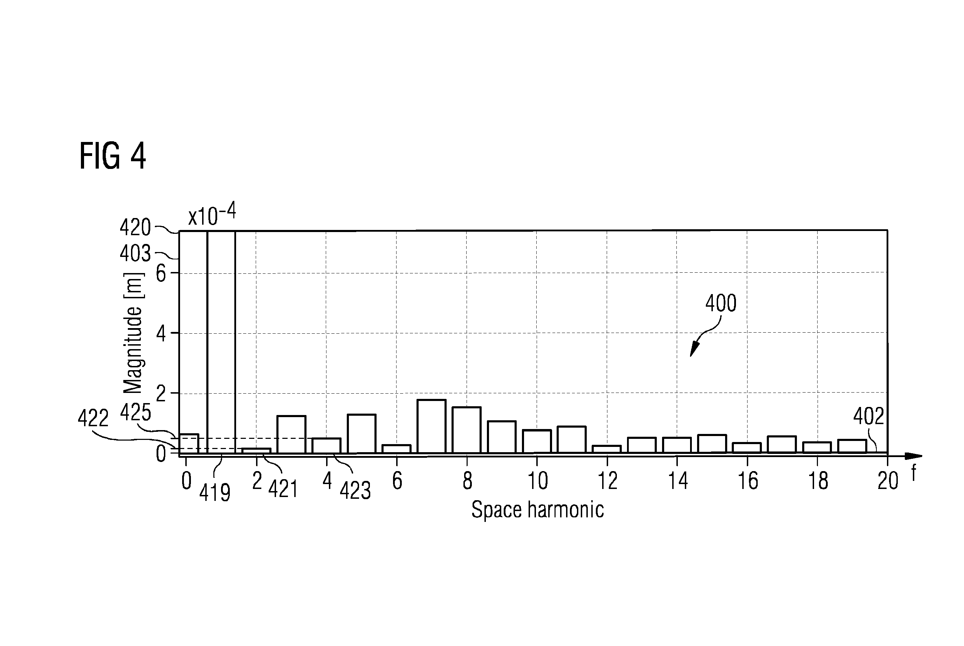

Fig. 4 illustrates the spectrum 400 corresponding to Fig. 2, wherein on the abscissa 402 the spatial frequency f is indicated in units of a multiple of the basic frequency and on the ordinate 403 the amplitude of the corresponding frequency component is indicated. As is evident from Fig. 4, the first order frequency component 419 has a particular high amplitude 420, while amplitude 422 of the second harmonic 421, the amplitude 424 of the fourth harmonic 423 and also other higher order frequency components are relatively low.

Thereby, the spectrum 400 may be characteristic of a desired spatial frequency characteristic of the radial extent of the teeth 519 of the stator segments 511-516. It should be noted that the spectrum 400 very much differs from the spectrum 200 of the same stator segments. Thus, the difference between the spectra 200 and 400 illustrated in Figures 2 and 4, respectively, is exclusively due to the different ordering of the stator segment 511-516.

Fig. 5 schematically illustrates the stator 500 which is assembled from six stator segments 511-516, wherein the radial direction is indicated by reference sign 503 and the circumferential direction is indicated by reference sign 502. According to other embodiments of the present invention more than six or less than six stator segments may be assembled to form the stator 500. According to other embodiments of the present invention the teeth 519 of the stator may protrude radially inwards, in contrast to the teeth 519 illustrated in Fig. 5 which protrude radially outwards.

According to other embodiments of the present invention the method may be applied to a rotor which is assembled from plural circumferential rotor segments.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method for determining a circumferential order of segments for forming a portion (500) of an electromagnetic machine, in particular an electrical generator, the method comprising:
obtaining measuring data (101, 301) indicative of a respective radial extent (r) of each of at least three segments (511-516), wherein the at least three segments, when successively arranged in a circumferential direction (302, 502), form a ring;
obtaining information indicative of a desired spatial frequency characteristic of the radial extent in the ring;
selecting, based on the measuring data and the information, a circumferential ordering (112, 111, 113, 114, 116, 115) of the segments (511-516) from possible orderings of the segments in the circumferential direction such that the desired spatial frequency characteristic is achieved.

2. Method according to claim 1, wherein the selecting comprises computing a spatial frequency characteristic (200, 400) for every ordering of the possible orderings and comparing the computed spatial frequency characteristic with the desired spatial frequency characteristic.

3. Method according to claim 2, wherein the computing the spatial frequency characteristic comprises calculating a Fourier Transform (200, 400) of the radial extent (r) of the segments ordered in every one of the possible orderings.

4. Method according to one of the preceding claims, wherein the obtaining the information comprises detecting a resonance of the electromagnetic machine.

5. Method according to one of the preceding claims, wherein the desired spatial frequency characteristic is **characterized by** minimization of a total harmonic distortion.

6. Method according to one of the preceding claims, wherein the desired spatial frequency characteristic is **characterized by** minimization of an amplitude (222, 224) of at least one predetermined spatial frequency component (221, 223) of the extent and/or minimization of ovalization of the ring and/or minimization of a breathing mode.

7. Method according to one of the preceding claims, wherein the measuring comprises optically measuring the extent, in particular using a laser.

8. Method according to one of the preceding claims, wherein 4 to 50 segments in particular 6 segments (511-516), form the ring.

9. Method according to one of the preceding claims, wherein the segments comprise stator segments each having at least one protruding tooth (519), wherein the measuring data indicative of a radial extent (r) of at least one of the at least one tooth of each of the stator segments.

10. Method according to the preceding claim, wherein the at least one tooth protrudes (519) radially outwards.

11. Method according to one of the preceding claims, wherein the segments comprises rotor segments, in particular protruding radially inwards.

12. Method according to one of the preceding claims, further comprising measuring the radial extent.

13. Method for manufacturing a portion of an electromagnetic machine, in particular an electrical generator, the method comprising:
determining an order of segments for forming a portion of the electromagnetic machine according to one of the preceding claims; and
assembling the segments (511-516) in the determined order (112, 111, 113, 114, 116, 115).

14. Arrangement for determining a circumferential order of segments for forming a portion of an electromagnetic machine, in particular an electrical generator, the arrangement comprising:
an input terminal adapted to obtain measuring data indicative of a respective radial extent of each of at least three segments, wherein the at least three segments, when successively arranged in a circumferential direction, form a ring; and
to obtain information indicative of a desired spatial frequency characteristic of the radial extent in the ring; and
a processor adapted to select, based on the measuring data and the information, a circumferential ordering of the segments from possible orderings of the segments in the circumferential direction such that the desired spatial frequency characteristic is achieved.
